Europäisches Patentamt

European Patent Office

Office européen des brevets

(19)

(11) Numéro de publication: **0 005 114**
**B1**

(12) **FASCICULE DE BREVET EUROPEEN**

(45) Date de publication du fascicule de brevet: **16.09.81**

(51) Int. Cl.³: **H 04 Q 3/52, H 04 B 9/00**

(21) Numéro de dépôt: **79400247.7**

(22) Date de dépôt: **17.04.79**

(54) Système de commutation spatiale et de commande d'un réseau de commutation de signaux à fréquences optiques.

(30) Priorité: **21.04.78 FR 7812862**

(43) Date de publication de la demande: **31.10.79 Bulletin 79/22**

(45) Mention de la délivrance du brevet: **16.09.81 Bulletin 81/37**

(84) Etats Contractants Désignés: **BE DE GB NL SE**

(56) Documents cités:
**FR - A - 2 295 666**
**US - A - 3 987 257**

(73) Titulaire: **Treheux, Michel Emile
An Tri Breud rue des Iles L'Ile Grande
F-22560 Plemeur-Bodou (FR)**
(73) Titulaire: **Lacroix, René Jean
rue Ampère
F-22700 Perros-Guirec (FR)**

(72) Inventeur: **Treheux, Michel Emile
An Tri Breud rue des Iles L'Ile Grande
F-22560 Plemeur-Bodou (FR)**
Inventeur: **Lacroix, René Jean
rue Ampère
F-22700 Perros-Guirec (FR)**

(74) Mandataire: **Le Guen, Louis François
13, rue Emile Bara BP 91
F-35800 Dinard (FR)**

Courier Press, Leamington Spa, England.

Système de commutation spatiale et de commande d'un réseau de commutation de signaux à fréquences optiques

La présente invention concerne un systéme de commutation spatiale et de commande d'un réseau de commutation spatiale d'informations modulant des fréquences porteuses optiques, le système étant utilisable notamment dans les réseaux de connexion téléphonique ou plus généralement les réseaux de télécommunication.

On sait que, dans un réseau de commutation spatiale, on prévoit des sélecteurs ou groupes de sélecteurs capables de relier, en permanence pendant la durée d'une communication, une ligne ou une jonction entrantes à une ligne ou une jonction sortantes.

Il a déjà été décrit, en particulier dans les demandes de brevet français publiées sous les Nº 2 171 241 et 2 243 573, des réseaux de commutation spatiales capables de transmettre des signaux à fréquences optiques, dans lesquels les sélecteurs sont des éléments de déviation de lumière formés par des hologrammes sélectables. A chaque point d'entrée optique du réseau correspond un sélecteur ou élément de déviation de lumiére à hologramme sélectable. Chaque sélecteur permet la déviation de la lumiére qui lui est appliquée vers l'un quelconque parmi une pluralité de points de sortie. Dans les demandes de brevet mentionnées ci-dessus, on décrit notamment comment, à partir de commande d'enregistrement, on enregistre sur un élément de déviation de lumière l'hologramme lui permettant de dévier la lumière qu'il reçoit du point d'entrée associé vers le point de sortie désigné par la commande d'enregistrement. En technique de commutation téléphonique, une telle commande d'enregistrement s'appelle un marquage, en général effectué par un marqueur. Un tel réseau de commutation spatiale de signaux à fréquences optiques est également décrit dans la communication intitulée "Optical Memory used in Wide Band Data Commutation" par R. Lacroix et Y. Bessonnat à la conférence "Second Euro-pean Electro-Optics Markets and Technology Conference", pages 206 à 210 du compte rendu.

Dans le brevet français 2 295 666, on a également décrit un réseau de commutation spatiale dans lequel les sélecteurs sont des éléments de déviation de lumière munis d'obturateurs photochromiques. Un émetteur de lumière de fond permet, en association avec les obturateurs photochromiques transparents ou non, de déterminer à l'aide de détecteurs de lumière quelles sont les lignes occupées. Ce système de supervision ne permet pas de détecter les états de ligne appelante. De plus, l'état de transparence d'un obturateur photochromique est commandé par un circuit de commande, si bien que la détection de cet état ne dépend pas directement de l'occupation réelle ou non, notamment dans le cas d'une ligne appelante, des lignes.

Un objet de l'invention consiste á prévoir un système de supervision qui ne présente pas ce défaut.

En pratique, chaque élément de déviation de lumière à hologramme sélectable utilisé dans ces réseaux connus constitue un réseau optique élémentaire. On rappelle qu'un réseau optique — et dans cette expression le terme "réseau" a un sens complètement différent de celui du même terme utilisé dans les expressions "réseau de commutation" ou "réseau de télécommunications" — est formé d'une succession régulière de traits présentant des carac-téristiques optiques alternativement dif-férentes. Le réseau optique classique par excellence est formé de traits noirs et blancs, mais les réseaux optiques les plus couramment employés sont des réseaux de phase où la caractéristique considérée est une variation d'épaisseur ou d'indice de réfraction, ce qui fait varier le produit $nxe$ où $n$ est l'indice et $e$ l'épaisseur. En ce qui concerne la théorie des réseaux optiques, on pourra notamment se reporter à l'ouvrage technique "Optique" par Bruhat, page 263, ou l'ouvrage technique "Images optiques" par Fleury et Mathieu, pages 398 à 402. Dans la suite on considérera plus particulièrement des réseaux optiques par transmission. Un tel réseau répartit une onde plane incidente dans les direc-tions $\theta_0$, $\theta_1$, $\theta_{-1}$, $\theta_2$, $\theta_{-2}$, etc., appelées ordres de diffraction. La relation entre les angles de ces directions est en fonction des caractéristiques du réseau et de l'onde incidente donnée par la formule approchée:

$$\sin \theta_i = i \frac{\lambda}{a}$$

où $i$ est l'ordre de diffraction, $a$ le pas du ré-seau et $\lambda$ la longueur d'onde lumineuse de l'onde incidente, les angles étant mesurés par rapport à un plan normal à celui du réseau et parallèle aux traits du réseau. L'intensité dans chaque ordre varie avec la nature du réseau. Certains réseaux de phase, tels que ceux utilisés suivant la présente invention, permettent de concentrer une partie importante de la lumière transmise dans l'ordre 1. Ce sont, en particulier, les réseaux blazés ou les réseaux épais, bien connus de l'homme de l'art.

En pratique, même si on rèussit à concentrer une partie importante de la lumière transmise dans l'ordre 1, une partie notable de la lumière est transmise dans l'ordre 0, c'est à dire sans déviation à travers le réseau optique.

Un objet de la présente invention consiste á uti-liser cette dernière propriété pour réaliser la fonction supervision complète des lignes d'un réseau de commutation spatiale à sélecteurs à hologrammes sélectables, tel qu'on l'a défini ci-dessus, cette fonction venant s'ajouter aux fonctions de commutation et de marquage, lesquelles font déjà partie de l'état de la technique.

Suivant une caractéristique de l'invention, il est prévu un système de commutation spatiale et de commande d'un réseau de commutation spatiale d'informations modulant des fréquences porteuses optiques, dans lequel les sélecteurs arrangés entre une pluralité d'entrées et une pluralité de sorties sont des éléments de déviation de lumière capables d'enregistrer une pluralité de réseaux optiques holographiques, chaque sélecteur étant associé à une entrée d'où il reçoit une onde lumineuse incidente et chaque réseau optique holographique d'un sélecteur déviant suivant une direction d'ordre non nul l'onde incidente vers une sortie sélectée dans la pluralité des sorties, caractérisé en ce que, dans la direction d'ordre O de chaque sélecteur, est disposé un photodétecteur dont les signaux de sortie définissent l'état allumé ou non de l'entrée associée et sont transmis à l'unité de commande de commutation du réseau de commutation spatiale.

Les caractéristiques de la présente invention mentionnées ci-dessus ainsi que d'autres, apparaîtront plus clairement à la lecture de la description suivante d'un exemple de réalisation, ladite description étant faite en relation avec les dessins joints, parmi lesquels:

la Fig. 1 est une vue schématique permettant d'illustrer la mise en oeuvre de la fonction supervision suivant l'invention,

la Fig. 2 est un schéma d'un système de commutation spatiale, suivant l'invention, et

la Fig. 3 est le schéma d'un poste d'abonné utilisable avec le système de commutation spatiale de la Fig. 2.

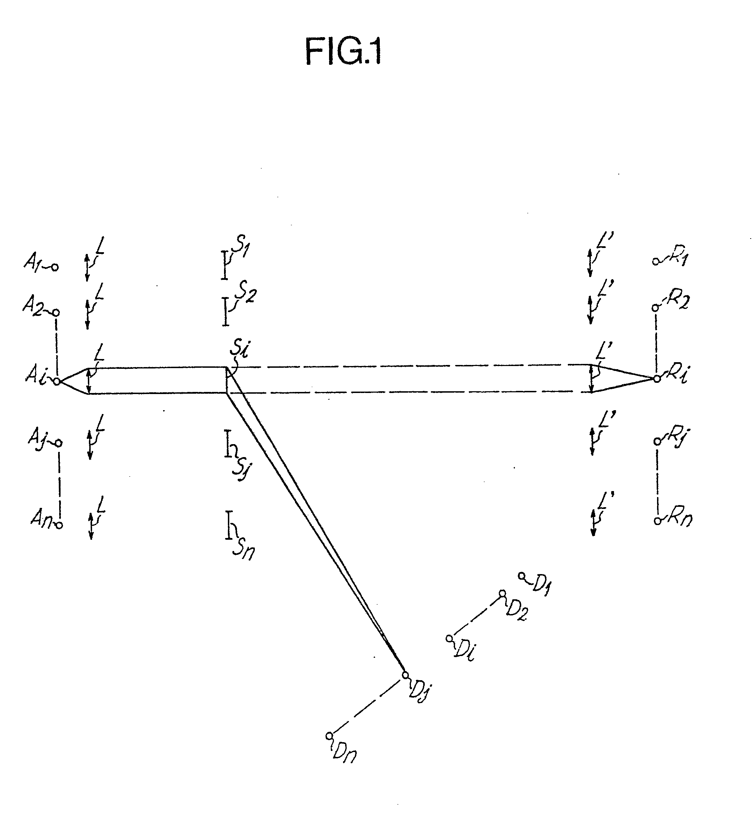

A la Fig. 1, on a représenté une pluralité de points d'entrée optique A1 à An, une pluralité de sélecteurs S1 à Sn et une pluralité de points de sortie optique D1 à Dn. Chaque sélecteur S1 à Sn est associé unilatéralement à un point d'entrée optique A1 à An. Chaque sélecteur S1 à Sn est susceptible d'enregistrer, à la fois, un parmi n réseaux optiques holographiques qui lui sont spécifiques. Ainsi, si le sélecteur Si enregistre le réseau optique j, parmi les n réseaux qu'il peut enregistrer, l'onde lumineuse provenant du point d'entrée Ai, associé à Si, est déviée vers le point de sortie Dj, qui par construction se trouve sur la direction d'ordre 1 du réseau j du sélecteur Si.

Il apparaît que, quand on désire transmettre la lumière émise par un point Ai vers une sortie Dj, c'est à dire réaliser la commutation de Ai vers Dj, il faut faire enregistrer par le sélecteur Si le réseau optique j, c'est à dire marquer le sélecteur Si par le réseau j. On a vu dans le préambule de la présente description que l'on savait réaliser ces deux fonctions. C'est pourquoi on ne décrira pas en détail la mise en oeuvre de ces fonctions dans la suite. On rappelle simplement que chaque sélecteur doit pouvoir garder en mémoire chaque réseau optique holographique qu'on lui recommande d'enregistrer. A cet effet, on connaît des matériaux photochromiques, des matériaux photoferroélectriques et des matériaux photothermoplastiques qui sont susceptibles d'entrer dans la composition des sélecteurs S1 à Sn. On pourra utilement se reporter à la description du certificat d'utilité français publié sous le N° 2 311 491. On peut aussi utiliser des matériaux magnéto-optiques.

Devant chaque point d'entrée A1 à An, on a fait figurer une lentille L pour indiquer clairement que les ondes appliquées aux sélecteurs S1 à Sn sont des ondes lumineuses planes, bien que cela ne soit pas obligatoire.

Par ailleurs, suivant l'invention, on a disposé une pluralité de photodétecteurs R1 à Rn, chaque photodétecteur Ri étant associé unilatéralement à un point d'entrée Ai et situé sur la direction d'ordre O du sélecteur Si, quand il est allumé par Ai. Dans l'exemple décrit, on a supposé que Ai, Si et Ri étaient alignés. Les ondes émises par les sélecteurs Si dans les directions d'ordre O étant des ondes planes, on a prévu devant chaque photodétecteur Ri une lentille de focalisation L'.

Il faut noter que, quel que soit le réseau optique holographique enregistré sur le sélecteur Si, dès que la source Ai émet une onde lumineuse, porteuse ou non de signaux, et pendant tout le temps de cette émission, le photodétecteur Ri délivre un courant électrique, mais par contre, quand la source Ai n'emet pas de lumière, le photodétecteur Ri ne délivre aucun courant. Ainsi, l'état du courant de sortie du photodétecteur Ri correspond à l'état allumé ou non de la source Ai.

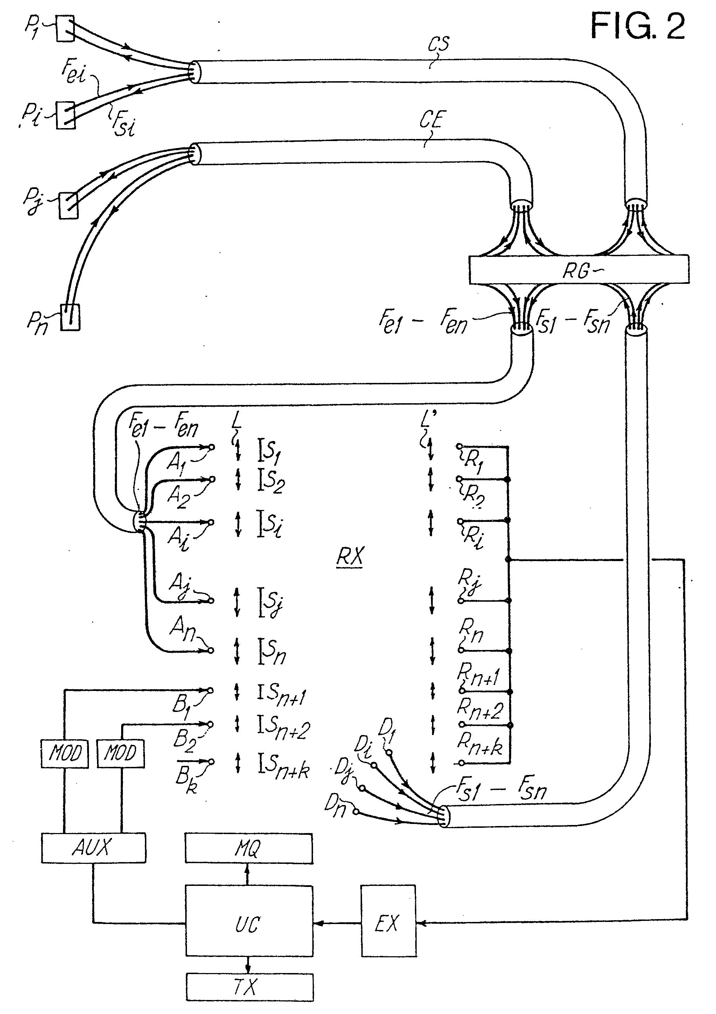

La propriété ci-dessus est mise à profit, comme on va le voir, dans le système de commutation spatiale de la Fig. 2. On suppose que le système de la Fig. 2 correspond à un centre local de commutation permettant de relier entre eux, deux à deux, des postes d'abonnés P1 à Pn.

Chaque poste d'abonné Pi est relié par une fibre optique entrante Fei et une fibre optique sortante Fsi à un côté d'un répartiteur général RG. De l'autre côté du répartiteur général, les fibres Fe1 à Fen sont regroupées dans un câble optique d'entrée CE pour être respectivement reliées aux points de sortie des fibres qui servent de sources A1 à An dans un centre de commutation spatiale optique RX utilisant des sélecteurs à réseaux optiques holographiques S1 à Sn, comme indiqué à la Fig. 1. Les sorties D1 à Dn du centre RX forment des points de départ des fibres Fs1 à Fsn, lesquelles sont regroupées dans un câble optique de sortie CS, puis reliées au côte central du répartiteur général RG.

Ainsi, il apparaît que, si l'on réalise à la fois la commutation du point Ai vers le point Dj à travers le sélecteur Si la commutation du point Aj vers le point Di à travers le sélecteur Sj, on établit une liaison du type connu en téléphonie classique sous le nom de "liaison à quatre fils". En effet, la fibre Fei du poste Pi est reliée, à travers RX à la fibre Fsj du poste Pj et la fibre Fej du poste Pj est reliée à travers RX à la fibre Fsi du poste Pi.

Comme on l'a indiqué en relation avec la Fig. 1, le centre RX comprend encore des photodétecteurs R1 à Rn dont les fils de sortie respectivement reliés aux entrées d'un circuit d'exploration ou explorateur EX. La ou les sorties de l'explorateur EX sont reliées à une ou des entrées d'une unité de commande UC. Une sortie de l'unité de commande UC est reliée à un marqueur MQ, une autre sortie de UC est reliée à un ensemble de circuits auxiliaires AUX, et enfin une autre sortie de UC est reliée à un ensemble de taxation automatique TX. La sortie de chaque circuit auxiliaire AUX est reliée à un modulateur MOD dont la sortie est reliée à une fibre optique Mi dont l'autre extrémité est reliée à un point d'entrée Bi du centre RX, de la même façon que les fibres Fei sont reliées aux points Ai. En pratique, les points d'entrée B1 à Bk, comme les points A1 à An, sont associés à des sélecteurs $S(n + 1)$ à $S(n + k)$ identiques aux sélecteurs S1 à Sn et à des photodétecteurs $R(n + 1)$ à $R(n + k)$ identiques aux photodétecteurs R1 à Rn. Les élécteurs $S(n + 1)$ à $S(n + k)$ permettent de commuter une onde lumineuse émise par le point d'entrée correspondant vers l'une quelconque des sorties D1 à Dn. Les photodétecteurs $R(n + 1)$ à $R(n + k)$ sont également reliés à des entrées correspondantes de l'explorateur EX.

Dans le système de la Fig. 2, l'explorateur EX peut fonctionner pratiquement comme un explorateur classique de central électronique moderne pour effectuer la supervision des fibres entrantes Fei, donc en particulier détecter une numérotation par impulsions. L'unité de commande UC peut, comme dans les centraux téléphoniques modernes, comprendre un ou deux calculateurs numériques capables en fonction des données transmises par l'explorateur EX en déduire des ordres transmis vers le marqueur MQ et/ou vers les circuits auxiliaires AUX, ou encore des données de taxation vers l'ensemble TX. Les circuits auxiliaires AUX sont des générateurs de tonalités classiques, telles que tonalité d'occupation, de retour d'appel, etc.

On va maintenant décrire le fonctionnement du système de la Fig. 2, en supposant que le poste d'abonné Pi est appelant et désire communiquer avec le poste Pj qui devient le poste appelé. Au décrochage du combiné dans le poste Pi, la fibre Fei commence à transmettre de la lumière qui est transmise au point Ai, puis passe à travers Si vers le photodétecteur Ri dont la sortie est excitée si bien que l'explorateur EX détecte l'état de poste appelant de Pi et transmet la donnée correspondante au poste UC. L'abonné de Pi compose sur son cadran le numéro d'appel du poste Pj si bien que la lumière subit des interruptions correspondantes dans Fei, lesquelles sont détectées par Ri et transmises à UC par EX. L'unité de commande UC recherche dans ses tables si le poste Pj est libre et, si tel est le cas, il donne l'ordre au marqueur MQ de faire enregistrer dans le sélecteur Si un hologramme $ij$ qui dévie une partie de la lumière émise par Ai vers Dj, une autre partie de la lumière atteignant toujours le photodétecteur Ri. La lumière reçue par Dj est transmise au poste Pj par la fibre Fjs. La réception de la lumière dans le poste Pj provoque le déclenchement d'une alarme ou sonnerie. Quand l'abonné du poste Pj décroche son combiné, de la lumière est émise par Fje vers le point Aj et donc Rj, à travers Sj. L'explorateur EX peut transmettre à l'UC l'information de décrochage du poste appelé Pj et l'unité de commande donne l'ordre au marqueur MQ de faire enregistrer dans le sélecteur Sj un hologramme $ji$ qui dévie une partie de la lumière émise par Aj vers Di, à travers Sj. Les abonnés sont alors en communication.

Dans le même temps que l'unité de commande UC donne l'ordre au marqueur MQ d'enregistrer l'hologramme $ij$ dans Si, elle peut également lui donner l'ordre de faire enregistrer dans le sélecteur $S(n + 1)$, qui est associé au point d'entrée Bl correspondant au circuit auxiliaire délivrant la tonalité de retour d'appel, l'hologramme $n + 1, i$ de manière que par la fibre Fsi l'abonné puisse savoir que l'appelé est libre et sonné. Dès que l'abonné Pj répond, l'UC donne l'ordre au marqueur MD d'effacer l'hologramme $n + 1. j$.

Pendant la durée de la communication, le photodétecteur Ri continue à recevoir de la lumière du point Ai, ce qui est détecté par l'explorateur EX et transmis à l'unité de commande UC qui en déduit éventuellement la taxation transmises à l'ensemble TX.

Dès que l'un des abonné Pi ou Pj à raccroché, le photodétecteur Ri ou Rj ne transmet plus de signal à EX et l'unité de commande UC donne l'ordre au marqueur MQ d'effacer l'hologramme $ij$. Il peut, à ce moment, dans une variante d'établissement de la taxation, transmettre la taxation globale à TX. Enfin, si, après un raccrochage d'un des abonnés, l'autre ne raccroche pas, ce qui est détecté par l'un des détecteurs Ri ou Rj, l'unité de commande UC donne au marqueur MQ l'ordre de faire enregistrer l'hologramme $n + m, i$ ou $n + m, j$ dans le sélecteur $S(n + m)$ qui est associé au point d'entrée Bm correspondant au circuit auxiliaire délivrant la tonalité d'occupation. Quand l'abonné raccroche, cet hologramme est effacé.

Si, au moment de la recherche effectuée dans l'unité de commande UC pour déterminer si l'abonné appelé est libre ou occupé, il apparaît que celui-ci est occupé, on procède comme dans le cas où un abonné n'a pas raccroché après une conversation.

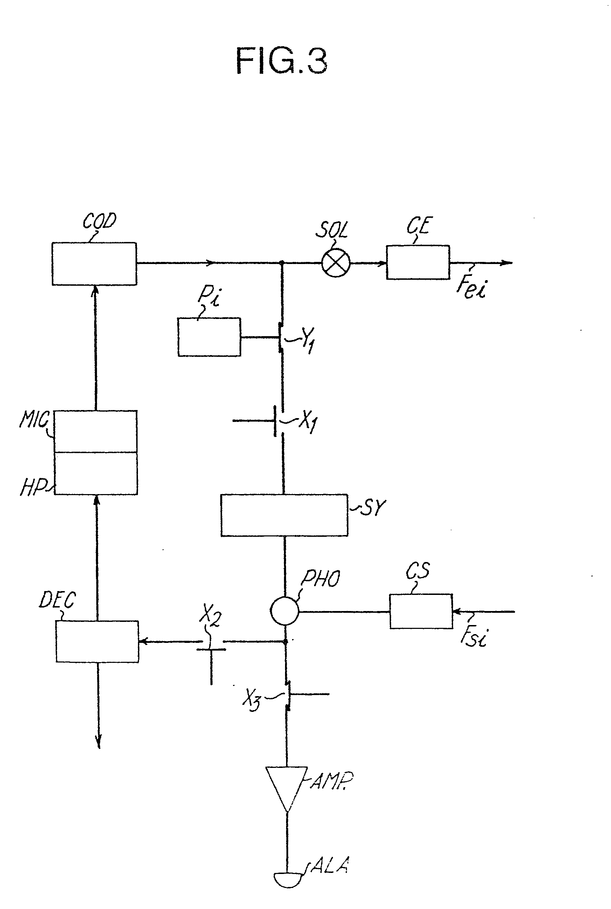

La Fig. 3 montre un schéma qui illustre un exemple de réalisation d'un poste d'abonné Pi. On y retrouve la fibre optique entrante Fei et la fibre optique sortante Fsi. L'entrée de la fibre Fei est reliée à la sortie d'un connecteur Ce dont l'entrée est reliée à la sortie d'une source de lumière SOL, ces composants formant la partie optique à l'émission. La sortie de la fibre Fsi est reliée à l'entrée d'un connecteur CS dont la sortie est reliée à l'entrée optique d'un photodétecteur PHO, ces composants formant la partie optique à la réception. L'entrée de modulation électrique de la source SOL est reliée, d'une part, à la sortie d'un codeur COD et, d'autre part, à une borne d'un circuit d'alimentation SY par l'intermédiaire d'un contact de travail X1 du crochet du poste téléphonique en série avec le contact de repos Y1 du cadran de numérotation du poste. L'entrée d'alimentation du photodétecteur PHO est en permanence reliée à une borne de sortie du circuit d'alimentation SY. La sortie de signaux électriques du photodétecteur PHO est reliée, d'une part, par un contact de travail X2 du crochet à l'entrée d'un décodeur DEC et, d'autre part, par l'intermédiaire d'un contact de repos X3 du crochet et d'un amplificateur AMP, à un dispositif d'alarme ou de sonnerie ALA. L'entrée du codeur COD est reliée à la sortie d'un circuit d'utilisation MIC, tel que la sortie d'un microphone. La sortie du décodeur DEC est reliée à l'entrée d'un circuit d'utilisation HP, tel que l'entrée d'un haut-parleur.

On va maintenant décrire le fonctionnement du poste de la Fig. 3. Quand l'abonné utilisant le poste décroche le combiné pour effectuer un appel, les contacts X1 et X2 viennent au travail et le contact X3 au repos, ouvert. Par le contact X1 fermé, la tension d'alimentation de SY est appliqué à la source SOL, Y1 étant normalement fermé. La source SOL émet une onde lumineuse vers Fei, par CE, ce qui provoque la détection de l'appel dans le réseau de commutation de la Fig. 2. Puis l'abonné appelant actionne le cadran du poste ce qui provoque des ouvertures classiques du contact Y1, lesquelles entraînent des coupures de l'onde lumineuse émise par SOL, qui sont détectées et traitées dans l'unité de commande UC de la Fig. 2. Quand l'abonné demandé est libre, comme on l'a vu plus haut, la fibre Fsi transmet une onde lumineuse qui est appliquée, par CS, au photodétecteur PHO qui applique le signal correspondant au décodeur DEC qui transmet la tonalité de retour d'appel. Quand l'abonné appelé a décroché, les signaux de parole sont reçus par Fsi, PHO et DEC et appliqués au haut-parleur HP. L'abonné appelant parle dans son microphone et les signaux de ce dernier sont transmis par COD, SOL et Fei vers l'autre poste.

Quand un poste, au repos est appelé, la fibre Fsi applique une onde lumineuse au photodétecteur PHO, le contact de repos X3 est fermé si bien que le signal de sortie de PHO est appliqué à l'amplificateur AMP dont la sortie déclenche la sonnerie ALA. Quand L'abonné appelé décroche son combiné, on retrouve le fonctionnement précédent.

En pratique, la source SOL peut être une diode électroluminescente, une diode-laser ou une source "laser" modulable. Le photodétecteur PHO peut être une photodiode PIN ou une photodiode fonctionnant en régime d'avalanche.

Dans la description qui prècède, en relation avec la Fig. 2, on a supposé que le poste d'abonné Pi était muni d'un cadran d'appel classique dont les signaux sont traduits par des interruptions de lumière. Bien entendu, le poste Pi pourrait être muni d'un clavier d'appel permettant l'émission de codes multifréquences servant à moduler la lumière émise sur Fei, cette modulation étant décodée dans le photodétecteur Ri.

Le circuit d'utilisation MIC peut être un appareil différent d'un microphone et peut être un appareil d'émission de téléphonie, visiophonie, télécopie ou de télévision, les fibres, sources et détecteurs utilisables dans le système de l'invention permettant aisément de transmettre les fréquences maximales correspondantes.

De même, le circuit HP peut, au lieu d'un haut-parleur, être un terminal visiophonique, un terminal de télécopie òu un récepteur de télévision.

Il faut encore noter que l'ensemble des signaux de signalisation, tels que signaux d'appel, de retour d'appel, de sonnerie, de présence des abonnés sur Ai et Ri, peuvent être obtenus à l'aide d'un codage très caractéristique de la porteuse optique, ce codage permettant une détection aisée derrière les différents photodétecteurs Ri, PHO. Ce codage peut être effectué, par exemple, à l'aide d'une sous-porteuse, telle qu'une fréquence pure à 500 Hz, avec détection synchrone par amplificateur sélectif, tel que l'amplificateur AMP de la Fig. 3. Un codage de ce type permet, en outre, une surveillance des lignes en permanence.

Il est bien évident qu'au lieu d'utiliser des réseaux optiques holographiques, on peut utiliser d'autres types de réseaux optiques qui pourraient être engendrés et effacés sur commande, ce que l'on peut encore appeler des réseaux optiques réinscriptibles.

A noter encore que l'ensemble des photodétecteurs Ri et l'explorateur Ex peut être constituer à l'aide d'une matrice de photodétecteurs à transfert de charge ou une matrice intégrée de photodétecteurs bipolaires commutés par des transistors MOS.

**Revendications**

1. Systéme de commutation lumineuse spatiale et de commande d'un réseau de commutation lumineuse spatiale d'informations modulant des fréquences porteuses optiques, dans lequel les sélecteurs (S1—Sn) arrangés entre une pluralité d'entrées (A1—An) et une pluralité de sorties (D1—Dn) sont des éléments de déviation de lumière capables d'enregistrer une pluralité de réseaux optiques holographiques, chaque sélecteur étant associé à une entrée d'où il reçoit une onde lumineuse incidente et chaque réseau optique holographique d'un sélecteur déviant suivant une direction d'ordre non nul l'onde incidente vers une sortie sélectée dans la pluralité des sorties, les enregistrements des réseaux optiques holographiques dans les sélecteurs étant commandés par une unité de commande (UC), caractérisé en ce que, dans la direction d'ordre 0 de chaque sélecteur, est disposé un photodétecteur (R1—Rn) dont les signaux de sortie définissent l'état allumé ou non de l'entrée associée et sont transmis à ladite unité de commande (UC).

2. Système suivant la revendication 1, caractérisé en ce qu'entre la pluralité de photodétecteurs (R1—Rn) et l'unité de commande est prévu un circuit explorateur (EX) testant l'état de chaque sortie de photodétecteur en temps partagé.

3. Système suivant la revendication 1 ou 2, modifié en ce que les réseaux optiques holographiques, sont remplacés par d'autres types de réseaux optiques réinscriptibles.

4. Système suivant l'une des revendications 1 à 3, caractérisé en ce que l'ensemble desdits photodétecteurs, associés respectivement auxdits sélecteurs est constitué par une matrice de photodétecteurs à transfert de charge ou une matrice intégrée de photodétecteurs bipolaires commutés par des transistors MOS.

5. Système suivant l'une des revendications 1 à 4, caractérisé en ce que les postes d'abonnés (P1—Pn) sont reliés au réseau de commutation lumineuse spatiale, au moins dans la partie terminale adjacente audit réseau de commutation lumineuse spatiale, par une fibre optique (Fe1—Fen) aller transmettant la lumière modulée par le microphone (MIC) ou transducteur du poste et par une fibre optique (Fs1—Fsn) retour transmettant la lumière modulée vers le haut-parleur (HP) ou transducteur de sortie du poste, chaque fibre aller (Fe1—Fen) étant reliée à une entrée dudit réseau de commutation lumineuse spatiale (RX) et chaque fibre retour (Fs1—Fsn) étant reliée à une sortie dudit réseau de commutation lumineuse spatiale (RX), une communication entre deux postes d'abonnés faisant ainsi intervenir deux entrées et deux sorties, deux sélecteurs et deux photodétecteurs.

6. Système suivant la revendication 5, caractérisé en ce que, dans les postes d'abonnés, les fibres retour sont reliées à des photodétecteurs (PHO) transmettant la modulation au transducteur de sortie du poste, les photodétecteurs étant alimentés en permanence (SY) pour pouvoir actionner une sonnerie sous l'action d'un signal lumineux provenant du centre ou d'un autre poste, tant que l'abonné correspondant n'a pas décroché.

7. Système suivant l'une des revendications 1 à 6, caractérisé en ce que, dans le système, les sources de lumière alimentant les fibres sont des diodes laser à semi-conducteur.

8. Système suivant l'une des revendications 1 à 6, caractérisé en ce que, dans le système, les sources de lumière alimentant les fibres sont des diodes électroluminescentes.

**Patentansprüche**

1. Optische Raummultiplex-Schalt- und Steueranordnung für ein Vermittlungsnetz mit optischer Raummultiplex-Vermittlung von optische Trägerfrequenzen modulierenden Informationen, bei dem die Wählschalter (S1—Sn) zwischen einer Vielzahl von Eingängen (A1—An) und einer Vielzahl von Ausgängen (D1—Dn) angeordnet sind und Lichtablenkungselemente bilden, die eine Vielzahl von holographischen optischen Gittern registrieren können, wobei jedem Wählschalter ein Eingang zugeordnet ist, von dem er eine auftreffende Lichtwelle empfängt und jedes holographische optische Gitter eines Wählschalters die auftreffende Lichtwelle in einer Richtung von nicht nullter Ordnung zu einem aus der Vielzahl von Ausgängen ausgewählten Ausgang ablenkt und die Registrierung der holographischen optischen Gitter in den Wählschaltern von einer Steuereinheit (UC) gesteuert wird, dadurch gekennzeichnet, daß in der Richtung nullter Ordnung eines jeden Wählschalters ein Photodetektor (R1—Rn) angeordnet ist, dessen Ausgangssignale den eingeschalteten bzw. nicht eingeschalteten Zustand des zugeordneten Eingangs anzeigen und die zu der genannten Steuereinheit (UC) übertragen werden.

2. Anordnung nach Anspruch 1, dadurch gekennzeichnet, daß zwischen der Vielzahl von Photodetektoren (R1—Rn) und der Seuereinheit eine Abtastschaltung (EX) vorgesehen ist, die im Zeitmultiplexverfahren den Zustand eines jeden Photodetektorausgangs prüft.

3. Anordnung nach Anspruch 1 oder 2, dadurch gekennzeichnet, daß die holographischen optischen Gitter durch wieder einschreibbare Gitter anderen Typs ersetzt sind.

4. Anordnung nach einem der Ansprüche 1 bis 3, dadurch gekennzeichnet, daß die genannten, den jeweiligen Wählschaltern zugeordneten Photodetektoren aus einer ladungsübertragenden Photodetektormatrix oder einer integrierten Matrix von zweipoligen Photodetektoren gebildet sind, die von MOS-Transistoren gesteuert werden.

5. Anordnung nach einem der Ansprüche 1 bis 4, dadurch gekennzeichnet, daß die Teilnehmerstellen (P1—Pn) — zumindest in dem dem optischen Raummultiplexvermittlungsnetz benachbarten Endteil — mit dem optischen Raummultiplexvermittlungsnetz über eine optische Vorwärts-Faser (Fe1—Fen) verbunden ist, die das vom Mikrophon (MIC) oder vom Umformer der Teilnehmerstelle modulierte Licht überträgt sowie über eine optische Rückwärts-Faser (Fs1—Fsn), die das modulierte Licht zum Lautsprecher (HP) oder zum Ausgangsumformer der Teilnehmerstelle überträgt, wobei jede Vorwärts-Faser (Fe1—Fen) mit einem Eingang des genannten optischen Raummultiplex-Vermittlungsnetzes (RX) und jede Rückwärts-

Faser (Fs1—Fsn) mit einem Ausgang dieses Netzes (RX) verbunden ist, so daß bei einer Verbindung zwischen zwei Teilnehmerstellen zwei Eingänge und zwei Ausgänge sowie zwei Wählschalter und zwei Photodetektoren benutzt werden.

6. Anordnung nach Anspruch 5, dadurch gekennzeichnet, daß in den Teilnehmerstellen die Rückwärts-Fasern mit Photodetektoren (PHO) verbunden sind, die die Modulation zum Ausgangs-Umformer der Teilnehmerstelle übertragen, wobei die Photodetektoren dauernd gespeist werden (SY), um auf ein von der Vermittlung oder einer anderen Teilnehmerstelle kommendes Lichtsignal hin einen Wecker betätigen zu können, solange der betreffende Teilnehmer nicht abgehoben hat.

7. Anordnung nach einem der Ansprüche 1 bis 6, dadurch gekennzeichnet, daß innerhalb der Anordnung die Lichtquellen zur Versorgung der Fasern Halbleiter-Laser-Dioden sind.

8. Anordnung nach einem der Ansprüche 1 bis 6, dadurch gekennzeichnet, daß innerhalb der Anordnung die Lichtquellen zur Versorgung der Fasern Elektro-Leuchtdioden sind.

## Claims

1. An optical space-division switching and control system for a network operating with optical space-division switching of information modulating optical carrier frequencies, wherein the switches (S1—Sn) are arranged between a plurality of inlets (A1—An) and a plurality of outlets (D1—Dn), and are light deflection elements that are capable to record a plurality of holographic optical arrays, each switch being associated to an inlet from which it receives impinging light wave and each holographic optical array in each switch deflecting impinging light wave along a direction of an order different of the 0-order direction toward an outlet selected among the plurality of outlets, recording of the holographic optical arrays in said switches being controlled by a switching control unit (UC), characterized by the fact that in the 0-order direction of each switch arranged is a photodetector (R1—Rn) whose output signals indicate the lit or unlit condition of the associated inlet and are transmitted to the said switching control unit (UC).

2. A system according to claim 1, characterized by the fact that, between the plurality of photodetectors (R1—Rn) and the control unit, a scanner circuit (EX) is provided which checks in a time-division mode the condition of each photodetector output.

3. A system according to claim 1 or 2, modified by the fact that the holographic optical arrays are replaced by other types of restorable optical arrays.

4. A system according one of the claim 1—3, characterized by the fact that the assembly of said photodetectors, respectively associated to said switches, is comprised of a matrix of charge transfer photodetectors or an integrated matrix of bipolar photodetectors switched by MOS transistors.

5. A system according to one of the claim 1—4, characterized by the fact that the subscriber sets (P1—Pn) are each connected to the optical space-division switching network, in at least a terminal portion adjacent to said optical space-division switching network, by a forward optical fiber (Fe1—Fen) transmitting the light modulated by the microphone (MIC) or the input set transducer and a backward optical fiber (Fs1—Fsn) transmitting the modulated light to the loudspeaker (HP) or the output set transducer, each forward optical fiber (Fe1—Fen) being connected to an inlet of the said optical space-division switching network (RX) and each backward optical fiber (Fs1—Fsn) being connected from an outlet of the said optical space-division switching network (RX), a communication between two subscriber sets making use of two inlets and two outlets, two switches and two photodetectors respectively.

6. A system according to claim 5, characterized by the fact that, in the subscriber set, the backward optical fibers are respectively connected to photodetectors (PHO) each transmitting the modulation to the output set transducer, said photodetectors being permanently supplied (SY) to be enabled to initiate ring under control of a light signal from the exchange or another subscriber set, as long as the subscriber has not hooked off.

7. A system according to one of the claim 1—6, characterized by the fact that, within the system, light sources supplying the fibers with light are semi-conductor laser diodes.

8. A system according to one of claim 1—6 characterized by the fact that, within the system, light sources supplying the fibers with light are electroluminescent diodes.

# FIG.1

0 005 114

FIG. 2

2

# FIG.3